# EUROPEAN PATENT SPECIFICATION

(11) **EP 0 390 292 B1**
(45) Date of publication and mention of the grant of the patent: **24.08.1994**
(21) Application number: 90200760.8
(22) Date of filing: 28.03.1990
(51) Int. Cl.: C08G 67/02, B01J 31/18

(54) **Catalyst compositions for the preparation of copolymers of carbon monoxide**
Katalysator-Zusammensetzung zur Herstellung von Kohlenmonoxid-Copolymeren
Compositions de catalyseur pour la préparation des copolymères de monoxyde de charbon

(30) Priority: 29.03.1989 NL 8900768
(43) Date of publication of application: 03.10.1990
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 277 695
- GB-A- 1 081 304
- US-A- 3 694 412

## Description

The invention relates to catalyst compositions suitable for the preparation of copolymers of carbon monoxide with one or more olefinically unsaturated compounds.

The relevant copolymers are linear and they have the units originating in carbon monoxide on the one hand, and the units originating in the olefinically unsaturated compounds on the other hand, occurring in alternating order. These copolymers can be prepared by contacting the monomers with a catalyst composition containing a palladium compound and triphenylphosphine. Two types of catalyst compositions may be considered for this purpose. Firstly, catalyst compositions may be based upon a palladium dihalide and triphenylphosphine (hereinafter referred to as catalyst compositions of the first type; see US-A-3 694 412). Secondly, catalyst compositions may be based upon a palladium salt, provided that the salt is not a halide, an anion of an acid with a pKa of less than 2, provided that the acid is not a hydrohalogenic acid, and triphenylphosphine (hereinafter referred to as catalyst compositions of the second type). Both types of catalyst composition have the drawback that they have only little copolymerization activity.

In the past, the Applicant has carried out an investigation into modification of the phosphine component in these catalyst compositions with the objective to enhance their copolymerization activity. For the catalyst compositions of the second type it was found that their copolymerization activities can be much enhanced by incorporating into the phenyl groups of the triphenylphosphine a substituent in a position ortho to the phosphorus atom. Thus, when in the copolymerization of carbon monoxide with ethene by employing a catalyst composition based upon palladium acetate, para-toluenesulphonic acid and triphenylphosphine, the triphenylphosphine was replaced by tris(2-methylphenyl)phosphine (see EP-A-0 277 695), the copolymerization activity increased by a factor of 10. This result is even more surprising as no copolymerization activity was found when in a similar copolymerization a catalyst composition of the first type, based upon palladium dichloride and triphenylphosphine, was used, in which the triphenylphosphine was replaced by tris(2-methylphenyl)phosphine.

Further research into the modification of the phosphine component in these catalyst compositions has now shown that the copolymerization activity of catalyst compositions of the second type can be considerably enhanced by replacing therein the triarylphosphine by a trialkylphosphine. The improvement in polymerization activity thus achieved is considerably larger than that obtained by incorporating into the phenyl groups of the triphenylphosphine a substituent in a position ortho to the phosphorus atom. Thus, when in the copolymerization of carbon monoxide with ethene using the catalyst composition of the second type, based upon palladium acetate, para-toluenesulphonic acid and triphenylphosphine, the triphenylphosphine was replaced by tri(n-butyl)phosphine, the copolymerization activity increased by a factor of 30. This observation is surprising in view of the fact that when in a similar copolymerization using the catalyst composition of the first type, based on palladium dichloride and triphenylphoshpine, the triphenylphosphine is replaced by tri(n-butyl)phosphine, the copolymerization activity decreases by a factor of 22.

The investigation has further shown that when the catalyst composition is based upon a palladium salt, an anion of an acid and a trialkylphosphine, with respect to the product obtained it is very important which anion is present in the catalyst composition. For use in these catalyst compositions, anions of very strong acids, i.e. with a pKa of less than 1, such as para-toluenesulphonic acid or trifluoroacetic acid, as well as anions of less strong acids, i.e. with a pKa of between 1 and 2, such as benzenephosphonic acid, may be considered. The investigation has shown that for the preparation of copolymers of carbon monoxide with one or more olefinically unsaturated compounds using a catalyst composition based upon a palladium salt, an anion of an acid and a trialkylphosphine, only the anions of acids with a pKa of less than 1 are eligible. The use of anions of weaker acids leads to the formation of undesired low molecular weight products. For instance, an attempt to prepare a carbon monoxide/ethene copolymer by using a catalyst composition on the basis of palladium acetate, benzenephosphonic acid (pKa=1.5) and tri(n-butyl)phosphine led to the formation of methyl propionate instead of the desired copolymer.

Catalyst compositions that are based upon
a) a palladium salt, provided that this is not a halide,
b) an anion of an acid having a pKa of less than 1, provided that the acid is not a hydrohalogenic acid, and
c) a phosphine of the general formula R¹R²R³P, wherein R¹, R² and R³ are identical or different alkyl groups,
are novel.

The present patent application therefore relates to catalyst compositions suitable for the copolymerization of carbon monoxide and one or more olefinically unsaturated compounds, characterized in that they are based upon the afore-mentioned components a)-c). Further, the patent application relates to a process for the preparation of polymers characterized in that a mixture of carbon monoxide with one or more olefinically unsaturated compounds is contacted with a catalyst composition according to the invention.

The palladium compound employed as component a) is preferably a palladium salt of a carboxylic acid, and, in particular, palladium acetate. Examples of suitable acids having a pKa of less than 1 (determined in aqueous solution at 18 °C) of which the anions should be present in the catalyst compositions as component b) are, among others, mineral acids, such as sulphuric acid and perchloric acid, sulphonic acids, such as para-toluenesulphonic acid and trifluoromethanesulphonic acid, and halocarboxylic acids, such as trifluoroacetic acid and trichloroacetic acid. Preferably, the catalyst composition contains an anion of a sulphonic acid, such as para-toluenesulphonic acid or an anion of a halocarboxylic acid, such as trifluoroacetic acid. Preferably, component b) is present in the catalyst compositions in a quantity of from 0.5 to 200 and in particular of from 1 to 100 mol per mol of palladium. The component b) may be incorporated in the catalyst compositions in the form of an acid as well as in the form of a salt. Eligible salts are, among others, non-noble transition metal salts, such as nickel and copper salts. Components a) and b) may be used combined in a single compound, if desired. An example of such a compound is palladium para-tosylate.

As components c) in the catalyst compositions, it is preferred to use phosphines in which the alkyl groups R¹, R² and R³ each contain up to 10 and in particular each up to 6 carbon atoms. Preference is further given to phosphines in which the alkyl groups are unbranched. Finally, it is preferred to use phosphines in which the alkyl groups are identical. An example of a phosphine that can very suitably be used as component c) in the catalyst compositions is tri(n-butyl)phosphine. In the catalyst compositions of the invention, the phosphines are preferably employed in a quantity of from 0.5 to 50 mol and in particular of from 1 to 25 mol per mol of palladium.

The polymerization using a catalyst composition of the invention is preferably carried out by contacting the monomers with a solution of the catalyst composition in a diluent in which the polymers are insoluble or virtually insoluble. Very suitable diluents are lower aliphatic alcohols, such as methanol. The polymerization may also be carried out in the gaseous phase, if desired.

Eligible olefinically unsaturated compounds which can be polymerized with carbon monoxide by using the catalyst compositions of the invention are compounds which consist exclusively of carbon and hydrogen as well as compounds which, in addition to carbon and hydrogen, contain one or more hetero atoms. The catalyst compositions of the invention are preferably applied for preparing polymers of carbon monoxide with one or more olefinically unsaturated hydrocarbons with up to 10 carbon atoms in the molecule. Examples of suitable hydrocarbon monomers are ethene and other α-olefins, such as propene, butene-1, hexene-1 and octene-1. The catalyst compositions of the invention are particularly suitable for application in the preparation of copolymers of carbon monoxide with ethene and in the preparation of terpolymers of carbon monoxide with ethene and another olefinically unsaturated hydrocarbon, in particular propene.

The preparation of the polymers is preferably carried out at a temperature of from 20 to 200 °C, a pressure of from 1 to 200 bar and by applying such a quantity of catalyst composition per mol of olefinically unsaturated compound to be polymerized, as contains 10⁻⁷-10⁻³ mol of palladium. Special preference is given to preparation carried out at a temperature of from 30 to 150 °C, a pressure of from 20 to 100 bar and by applying such a quantity of catalyst composition per mol of olefinically unsaturated compound to be polymerized, as contains 10⁻⁶-10⁻⁴ mol of palladium. The molar ratio of olefinically unsaturated compounds relative to carbon monoxide in the mixture to be polymerized is preferably 10:1-1:10 and in particular 5:1-1:5.

The invention will now be illustrated with the aid of the following examples.

### Example 1

A carbon monoxide/ethene copolymer was prepared as follows. A stirred autoclave with a capacity of 250 ml was charged with a catalyst solution comprising
50 ml methanol,
0.1 mmol palladium acetate,
2.0 mmol para-toluenesulphonic acid (pKa=0.7), and
0.3 mmol triphenylphosphine.

After 30 bar ethene and 30 bar carbon monoxide had been blown in, the contents of the autoclave were brought to a temperature of 110 °C. Polymerization was terminated after 5 hours, by cooling to room temperature and releasing the pressure. The polymer formed was filtered off, washed with methanol and dried.

0.26 g of copolymer was obtained. The polymerization rate was 5 g copolymer/g palladium.hour.

### Example 2

A carbon monoxide/ethene copolymer was prepared substantially in the same way as the copolymer of Example 1, except that now the catalyst solution comprised 1.0 mmol instead of 2.0 mmol of para-toluenesulphonic acid, and 0.15 mmol of tris(2-methylphenyl)phosphine instead of triphenylphosphine.

2.6 g of copolymer was obtained. The polymerization rate was 50 g copolymer/g palladium.hour.

### Example 3

A carbon monoxide/ethene copolymer was prepared as follows. A stirred autoclave with a capacity of 50 ml was charged with 0.01 g of palladium dichloride, 0.03 g of triphenylphosphine and 4 g of acetonitrile. After 60 bar ethene and 7 bar carbon monoxide had been blown in, the contents of the autoclave were brought to a temperature of 95 °C. Polymerization was terminated after 19 hours, and the polymer was isolated.

0.37 g of copolymer was obtained. The polymerization rate was 3.2 g copolymer/g palladium.hour.

### Example 4

Example 3 was substantially repeated, but with the following differences
a) the autoclave was charged with 0.036 g of tris(2-methylphenyl)phosphine instead of triphenylphosphine,
b) the reaction temperature was 100 °C instead of 95 °C, and
c) the reaction time was 18 hours instead of 19 hours.

No polymer material was formed.

### Example 5

A carbon monoxide/ethene copolymer was prepared substantially in the same way as the copolymer of Example 1, except for the following differences
a) the catalyst solution comprised 5.0 mmol instead of 2.0 mmol of para-toluenesulphonic acid, and 0.5 mmol of tri(n-butyl)phosphine instead of triphenylphosphine,
b) 20 bar ethene and 20 bar carbon monoxide were blown into the autoclave instead of 30 bar of each, and
c) the reaction time was 2.5 hours instead of 5 hours.

4.0 g of copolymer was obtained. The polymerization rate was 150 g copolymer/g palladium.hour.

### Example 6

Example 5 was substantially repeated, but with the following differences
a) the catalyst solution comprised 5.0 mmol of benzenephosphonic acid (pKa=1.5) instead of para-toluenesulphonic acid,
b) the reaction temperature was 130 °C instead of 110 °C, and
c) the reaction time was 4 hours instead of 2.5 hours.

0.43 g of methyl propionate was obtained. The reaction rate was 10 g methyl propionate/g palladium.hour. Only traces of polymer material were formed.

### Example 7

Example 5 was substantially repeated, except that now the catalyst solution comprised 5.0 mmol of hydrochloric acid (added as a 37.5% solution in water) instead of benzenephosphonic acid. Only traces of polymer material were formed.

### Example 8

A carbon monoxide/ethene copolymer was prepared as follows. A stirred autoclave with a capacity of 600 ml was charged with 0.55 g of [(C₆H₅)₃P]₂PdCl₂ and 50 ml of acetonitrile. After 60 bar ethene and 10.5 bar carbon monoxide had been blown in, the contents of the autoclave were brought to a temperature of 120 °C. Polymerization was terminated after 18 hours, and the polymer was isolated.

11.3 g of copolymer was obtained. The polymerization rate was 7.5 g copolymer/g palladium.hour.

### Example 9

A carbon monoxide/ethene copolymer was prepared substantially in the same way as the copolymer of Example 8, except that now the autoclave was charged with 0.50 g of PdCl₂ and 0.58 g of tri(n-butyl)phosphine instead of 0.55 g of [(C₆H₅)₃P]₂PdCl₂.

1.85 g of copolymer was obtained. The polymerization rate was 0.34 g copolymer/g palladium.hour.

Of Examples 1-9, only Example 5 is in accordance with the invention. In this Example, the catalyst composition used to prepare a carbon monoxide/ethene copolymer was a catalyst composition according to the invention, on the basis of palladium acetate, para-toluenesulphonic acid (pKa=0.7) and tri(n-butyl)phosphine. Examples 1-4 and 6-9 fall outside the scope of the invention and have been included herein for comparison.

Comparison of the results of Examples 1 and 2 shows that when the triphenylphosphine in a catalyst composition of the second type is replaced by a tris(ortho-substituted phenyl)phosphine, this has a positive effect on its copolymerization activity. Comparison of the results of Examples 3 and 4 shows that when the said replacement is applied to a catalyst composition of the first type, this has a negative effect on its polymerization activity.

Comparison of the results of Examples 1 and 5 shows that when the triphenylphosphine in a catalyst composition of the second type which contains an anion of an acid with a pKa of less than 1, is replaced in accordance with the invention by a trialkylphosphine, this has a strong positive effect on the catalyst's polymerization activity. Comparison of the results of Examples 8 and 9 shows that when the said replacement is applied to a catalyst composition of the first type, this has a negative effect on its polymerization activity.

The results of Examples 6 and 7 demonstrate that compositions based upon palladium acetate, a trialkylphosphine and an anion of either an acid with a pKa>1 or a hydrohalogenic acid are not suitable for use as catalysts for preparing carbon monoxide/ethene copolymers.

With the aid of ¹³C-NMR analysis, it was established that the carbon monoxide/ethene copolymers prepared according to Examples 1, 2 and 5 were made up of linear chains in which the units originating in carbon monoxide on the one hand, and the units originating in ethene on the other hand, occurred in alternating order.

## Claims

1. Catalyst compositions suitable for the copolymerization of carbon monoxide and one or more olefinically unsaturated compounds, which catalyst compositions are based upon
a) a palladium salt, provided that it is not a halide,
b) an anion of an acid with a pKa of less than 1, provided that the acid is not a hydrohalogenic acid, and
c) a phosphine of the general formula R¹R²R³P, wherein R¹, R² and R³ are identical or different alkyl groups.

2. Catalyst compositions as claimed in claim 1, characterized in that they are based upon a palladium salt of a carboxylic acid, such as palladium acetate, as component a).

3. Catalyst compositions as claimed in claim 1 or 2, characterized in that they are based upon an anion of a sulphonic acid, such as para-toluenesulphonic acid, or of a halocarboxylic acid, such as trifluoroacetic acid, as component b).

4. Catalyst compositions as claimed in one or more of claims 1-3, characterized in that they are based upon a phosphine in which the alkyl groups R¹, R² and R³ each contain up to 10 carbon atoms, as component c).

5. Catalyst compositions as claimed in one or more of claims 1-4, characterized in that they are based upon a phosphine in which the alkyl groups are unbranched, as component c).

6. Catalyst compositions as claimed in one or more of claims 1-5, characterized in that they are based upon a phosphine in which the three alkyl groups are identical, such as tri(n-butyl)phosphine, as component c).

7. Catalyst compositions as claimed in one or more of claims 1-6, characterized in that they comprise 0.5 to 200 mol of component b) and 0.5 to 50 mol of component c) per mol of palladium.

8. Process for the preparation of polymers, characterized in that a mixture of carbon monoxide with one or more olefinically unsaturated compounds is contacted with a catalyst composition as claimed in one or more of claims 1-7.

9. A process as claimed in claim 8, characterized in that the mixture of carbon monoxide with one or more olefinically unsaturated compounds is contacted with a solution of the catalyst composition in a diluent in which the polymers are insoluble or virtually insoluble, such as methanol.

10. A process as claimed in claims 8 or 9, characterized in that it is carried out at a temperature of from 20 to 200 °C, a pressure of from 1 to 200 bar and a molar ratio of the olefinically unsaturated compounds relative to carbon monoxide in the mixture to be polymerized, of 10:1-1:10, and in that per mol of olefinically unsaturated compound to be polymerized, such a quantity of catalyst composition is used as to contain 10⁻⁷-10⁻³ mol of palladium.

## Patentansprüche

1. Katalysatorzusammensetzungen, welche sich für das Copolymerisieren von Kohlenmonoxid mit einer oder mehreren olefinisch ungesättigten Verbindung(en) eignen, welche Katalystorzusammensetzungen auf nachstehenden Komponenten basieren:
a) einem Palladiumsalz, mit der Maßgabe, daß es sich nicht um ein Halogenid handelt,
b) einem Anion einer Säure mit einem pKa-Wert von weniger als 1, mit der Maßgabe, daß die Säure keine Halogenwasserstoffsäure ist, und
c) einem Phosphin der allgemeinen Formel R¹R²R³P, in welcher R¹, R² und R³ gleiche oder verschiedene Alkylgruppen darstellen.

2. Katalystorzusammensetzungen, wie in Anspruch 1 beansprucht, dadurch gekennzeichnet, daß sie auf einem Palladiumsalz einer Carbonsäure, wie Palladiumacetat, als Komponente a) basieren.

3. Katalystorzusammensetzungen, wie in Anspruch 1 oder 2 beansprucht, dadurch gekennzeichnet, daß sie auf einem Anion einer Sulfonsäure, wie p-Toluolsulfonsäure, oder einer Halogencarbonsäure, wie Trifluoressigsäure, als Komponente b) basieren.

4. Katalystorzusammensetzungen, wie in irgendeinem oder mehreren der Ansprüche 1 bis 3 beansprucht, dadurch gekennzeichnet, daß sie auf einem Phosphin als Komponente c) basieren, in welchem die Alkylgruppen R¹, R² und R³ jeweils bis zu 10 Kohlenstoffatome enthalten.

5. Katalystorzusammensetzungen, wie in irgendeinem oder mehreren der Ansprüche 1 bis 4 beansprucht, dadurch gekennzeichnet, daß sie auf einem Phosphin als Komponente c) basieren, in welchem die Alkylgruppen unverzweigt sind.

6. Katalystorzusammensetzungen, wie in irgendeinem oder mehreren der Ansprüche 1 bis 5 beansprucht, dadurch gekennzeichnet, daß sie auf einem Phosphin als Komponente c) basieren, in welchem die drei Alkylgruppen identisch sind, wie Tri(n-butyl)phosphin.

7. Katalystorzusammensetzungen, wie in irgendeinem oder mehreren der Ansprüche 1 bis 6 beansprucht, dadurch gekennzeichnet, daß sie je Mol Palladium 0,5 bis 200 Mol der Komponente b) und 0,5 bis 50 Mol der Komponente c) enthalten.

8. Verfahren zur Herstellung von Polymeren, dadurch gekennzeichnet, daß eine Mischung aus Kohlenmonoxid und einer oder mehreren olefinisch ungesättigten Verbindung(en) mit einem Katalysator, wie in einem oder mehreren der Ansprüche 1 bis 7 beansprucht, kontaktiert wird.

9. Ein Verfahren, wie in Anspruch 8 beansprucht, dadurch gekennzeichnet, daß die Mischung aus Kohlenmonoxid und einer oder mehreren olefinisch ungesättigten Verbindung(en) mit einer Lösung der Katalysatorzusammensetzung in einem Verdünnungsmittel kontaktiert wird, in welchem die Polymere unlöslich oder praktisch unlöslich sind, wie Methanol.

10. Ein Verfahren, wie in den Ansprüchen 8 und 9 beansprucht, dadurch gekennzeichnet, daß es bei einer Temperatur im Bereich von 20 bis 200°C, einem Druck im Bereich von 1 bis 200 bar und bei einem Molverhältnis von olefinisch ungesättigten Verbindungen relativ zum Kohlenmonoxid in der zu polymerisierenden Mischung von 10:1 bis 1:10 durchgeführt wird und daß je Mol der zu polymerisierenden olefinisch ungesättigten Verbindung eine solche Menge der Katalysatorzusammensetzung angewendet wird, daß diese 10⁻⁷ bis 10⁻³ Mol Palladium enthält.

## Revendications

1. Compositions de catalyseur convenables pour la copolymérisation de monoxyde de carbone et d'un ou plusieurs composés à insaturation oléfinique, ces compositions de catalyseur étant à base de
a) un sel de palladium,à condition que ce ne soit pas un halogénure,
b) un anion d'un acide avec un pKa inférieur à 1, à condition que l'acide ne soit pas un acide halogénhydrique, et
c) une phosphine de formule générale R¹R²R³P, dans laquelle R¹, R² et R³ sont des groupes alkyle identiques ou différents.

2. Compositions de catalyseur selon la revendication 1, caractérisées en ce qu'elles sont à base d'un sel de palladium d'un acide carboxylique tel que l'acétate de palladium à titre de composant a).

3. Compositions de catalyseur selon la revendication 1, caractérisées en ce qu'elles sont à base d'un anion d'un acide sulfonique, tel que l'acide para-toluènesulfonique, ou d'un acide halogénocarboxylique, tel que l'acide trifluoroacétique, à titre de composant b).

4. Compositions de catalyseur selon une ou plusieurs des revendications 1 - 3, caractérisées en ce qu'elles sont à base d'une phosphine dans laquelle les groupes alkyle R¹, R² et R³ contiennent chacun jusqu'à 10 atomes de carbone, à titre de composant c).

5. Compositions de catalyseur selon une ou plusieurs des revendications 1 - 4, caractérisées en ce qu'elles sont à base d'une phosphine dans laquelle les groupes alkyle ne sont pas ramifiés, à titre de composant c).

6. Compositions de catalyseur selon une ou plusieurs des revendications 1 - 5, caractérisées en ce qu'elles sont à base d'une phosphine dans laquelle les trois groupes alkyle sont identiques, comme la tri(n-butyl)phosphine, à titre de composant c).

7. Compositions de catalyseur selon une ou plusieurs des revendications 1 - 6, caractérisées en ce qu'elles comprennent 0,5 à 200 moles de composant b) et 0,5 à 50 moles de composant c) par mole de palladium.

8. Procédé de préparation de polymères, caractérisé en ce que l'on met un mélange de monoxyde de carbone avec un ou plusieurs composés à insaturation oléfinique en contact avec une composition de catalyseur selon une ou plusieurs des revendications 1 - 7.

9. Procédé selon la revendication 8, caractérisé en ce que l'on met le mélange de monoxyde de carbone avec un ou plusieurs composés à insaturation oléfinique en contact avec une solution de la composition de catalyseur dans un diluant dans lequel les polymères sont insolubles ou pratiquement insolubles, comme le méthanol.

10. Procédé selon la revendication 8 ou 9, caractérisé en ce qu'on l'effectue à une température allant de 20 à 200°C, sous une pression de 1 à 200 bars et dans un rapport molaire des composés à insaturation oléfinique par rapport au monoxyde de carbone dans le mélange à polymériser de 10 : 1 - 1 : 10, et en ce que par mode de composé à insaturation oléfinique à polymériser, on utilise une quantité de composition de catalyseur telle qu'elle contienne 10⁻⁷ - 10⁻³ modes de palladium.
